# EUROPEAN PATENT APPLICATION

(11) **EP 3 815 958 A1**
(43) Date of publication of application: **05.05.2021**
(21) Application number: 19206872.4
(22) Date of filing: 04.11.2019
(51) Int. Cl.: B60L 53/10, B60L 53/65, B60L 53/16, H02J 7/00, B60L 3/00, H02M 1/44, H02M 1/12

(54) **ELECTRICAL VEHICLE CHARGING ARRANGEMENT AND RESPECTIVE METHOD**

(71) Applicant: ABB Schweiz AG, 5400 Baden (CH)
(72) Inventor: Raaijmakers, Stefan, 2613 WN Delft (NL)
(74) Representative: Maiwald Patent- und Rechtsanwaltsgesellschaft mbH

(57) **Abstract**

The invention relates to an electric vehicle charging arrangement comprising an electric vehicle supply equipment, EVSE, (1) and an electric vehicle (2), the EVSE (1) comprising a plurality of power stages (3) each configured for providing electrical energy to charge the electrical vehicle (2) and each comprising a Y-capacitance (4), at least one outlet (9) configured for connecting the electrical vehicle (2) to at least one of the power stages (3) for charging the electrical vehicle (2), at least one switch (7) configured for connecting two power stages (3) in parallel and/or in series, and a control device (10) and/or the electric vehicle (2) are configured for switching the at least one switch (7) based on the Y-capacitance (4) and on a vehicle information.

## Description

### Technical Field

The invention relates to an electric vehicle charging arrangement comprising an electric vehicle supply equipment, EVSE, and an electric vehicle, the EVSE comprising a plurality of power stages each configured for providing electrical energy to charge the electrical vehicle and each comprising a Y-capacitance, at least one outlet configured for connecting the electrical vehicle to at least one of the power stages for charging the electrical vehicle, and at least one switch configured for connecting two power stages in parallel and/or in serial. The invention further relates to a respective method.

### Background Art

Electric vehicles have become very popular in many countries. For charging said electric vehicles with electrical energy charging devices are being installed in public spaces such as parking lots or at private premises as charging infrastructure. Said charging devices, often referred to as electric vehicle supply equipment, EVSE, are equipped with charge cables, which are plugged by means of a charging connector into the electric vehicle. During a charging session with nowadays charging devices, currents of 500 A or more are applied onto the charge cable for enabling so called fast charging. Such fast charging often use a Combined Charging System, CCS, protocol according to IEC 61851-23 and SAE J1772 standard for charging electric vehicles both in the US and in the European Union, EU. Other common charging protocols are CHAdeMO, GB or plain AC.

Standard IEC 61851-23:2014 ed1.0 prescribes in clause CC.4.7 a Y-capacity limit of 500 nF per rail in such EVSEs in order to protect people using electric vehicles against electric shocks, cf. ISO 6469-3 cl 7.3.3.2. However, said standard has been formulated at a time when EVSEs provided not more than 50 kW charging power, which nowadays is not realistic anymore, as charging currents go even beyond 600 A. For such fast charging more Y-capacity is required in order to comply with EMC requirements, as for instance defined in standard IEC 61851-21-2. On the other side, for achieving backward compatibility to charge 'older' vehicles, the Y-capacity has to be limited, which therefore creates a problem for today's charging infrastructure in order to charge 'older' and 'newer' electric vehicles with the same infrastructure.

### Summary of invention

It is therefore an object of the invention to provide an electric vehicle charging arrangement and a respective method for flexibly charging 'older' electric vehicles at lower charging currents and voltages as well as charging 'newer' electric vehicles at higher charging currents and voltages.

The object of the invention is solved by the features of the independent claims. Preferred embodiments are described in the dependent claims.

The object is solved by an electric vehicle charging arrangement comprising an electric vehicle supply equipment, EVSE, and an electric vehicle,
the EVSE comprising
a plurality of power stages each configured for providing electrical energy to charge the electrical vehicle and each comprising a Y-capacitance,
at least one outlet configured for connecting the electrical vehicle to at least one of the power stages for charging the electrical vehicle,
at least one switch configured for connecting two power stages in parallel and/or in serial, and
a control device and/or the electric vehicle are configured for switching the at least one switch based on the Y-capacitance and on a vehicle information.

A key point of the proposed solution is therefore that in particular the number of power stages connected in parallel in order to increase a charging current is dependent on the Y-capacitance and on the vehicle information i.e. dependent on the electric vehicle to be charged. For example, for 'newer' electric vehicles not having any constraints in regard to the (overall) Y-capacitance a basically unlimited number of power stages can be connected in parallel by the control device in order to provide a best possible and/or maximum charging current/charging power available from the EVSE/accepted by the electric vehicle, thereby exceeding a possible Y-capacitance limit for high-power charging. For charging 'older' electric vehicles having a limited Y-capacitance that cannot be exceeded during charging the control device only switches on a limited number of power stages. Such way the proposed solution, in other words, basically allows for 'negotiating' the Y-capacitance for a respective charging session between the EVSE and the electric vehicle, based on the known Y-capacitance of the power stages and the vehicle information defining a maximum Y-capacitance for charging.

The electric vehicle supply equipment, EVSE, also referred to as electric vehicle, EV, charging station, electric recharging point, charging point, charge point, charge post or electronic charging station, ECS. The EVSE is an element in an infrastructure that supplies electric energy for recharging of electric vehicles, including electric cars, neighbourhood electric vehicles and plug-in hybrids, via a charging cable and a charging connector to the EV. EVSEs usually comply with standards for electric vehicle fast charging, such as the so-called Combined Charging System, CCS, protocol according to IEC 61851-23 and SAE J1772 standard for charging electric vehicles both in the US and in the European Union, EU. The Combined Charging System, CCS, protocol is a fast charging method for charging electric vehicles delivering high-voltage direct current via a charging connector derived from SAE J1772 standard (IEC Type 1) or IEC Type 2 connector. Automobile manufactures that support CCS include Jaguar, Volkswagen, General Motors, BMW, Daimler, Ford, FCA, Tesla and Hyundai. The CSS standard is controlled by the so called CharIN consortium. Besides other protocols such as, for example, CHAdeMO, as abbreviation of CHArge de Move, or GB/T, in particular according to 20234.3-2011 standard. The proposed solution can be advantageously used with even higher charging currents such as or more than 500A, 600A or 3000A, voltages such as or higher 1000V, 1500V or 3000V and/or in combination with newer standards not yet defined requiring higher currents.

Each power stage may comprise a converter and/or a transformer connected to an AC, alternating current, grid for receiving electrical energy, which is transformed and/or converted to DC, direct current, for charging a battery of the electric vehicle. The electric vehicle can be provided as a motor car, a bus, a van, a truck, a tractor or any other electrically powered vehicle. Each outlet may comprise an outlet port, to which the charging cable is connected, for connecting to the electrical vehicle via the charging connector. The outlet may be arranged distant to the power stage, for example 10 or 30 meters distant. The switch can be provided as contactor and/or can be provided within the outlet, in case of the switch between two outlets and/or associated to a respective power stage. The switch can be provided within a DC path between the respective power stage and a DC bus connecting the various power stages together and/or can be provided within the DC bus between each two power stages. The Y-capacitance is preferably defined as per standard IEC 61851-23:2014 ed1.0 in clause CC.4.7 i.e. as 500 nF per DC rail, in order to protect electric vehicles against electric shocks, cf. ISO 6469-3 cl 7.3.3.2. In other words, the Y-capacitance shall be ≤ 500 nF across each DC rail and ground for a DC EVSE with the Y-capacitance preferably equally distributed between each DC rail and ground. Thus, a maximum total parallel Y-capacitance per power stage shall preferably not exceed 1 µF. The switch may connect a plurality of stages in series and/or in parallel.

The arrangement may comprise of a single outlet or a plurality of outlets. For example, if 5 power stages and 5 respective outlets are provided, the system may comprise 4 switches for connecting the power stages in parallel. Such way, if all 4 switches are closed, 1 electrical vehicle can be charged with electrical energy provided by 5 power stages such wise connected in parallel. Alternatively, the number of power stages can be greater than the number of outlets. The control device is preferably provided as a computerized means, whereby a single control device can be associated to each power stage. Preferably a single control device is connected to all switches. Switching the at least one switch based on the Y-capacitance and on the vehicle information shall preferably be understood that the number of power stages connected respectively switched via the at least one switch or all switches does not exceed a maximum Y-capacitance associated to the specific electric vehicle to be charged. Such way the vehicle information preferably represents a maximum Y-capacitance associated to the specific electric vehicle to be charged. The term the electric vehicle is configured for switching the at least one switch can be understood that the electric vehicle submits a switching information preferably in regard to a maximum Y-capacitance allowable during charging to the EVSE, which then switches the at least one switch via the control device or not commence charging at all if the requested charging power cannot be met. Thus, charging may not even start if a Y-capacitance limit cannot be met, even with only one power stage of the EVSE.

In such way according to a preferred implementation the control device is configured for switching on the at least one switch based on the Y-capacitance of all power stages and on the electric vehicle information received from the electric vehicle defining a maximum allowable Y-capacity for charging the electric vehicle. The vehicle information can be transmitted wirelessly from the electric vehicle, for example by a wireless network and/or the Internet, or wired via the charging cable once connected between the EVSE and the electric vehicle. Preferably the vehicle information, in particular a Y-capacitance limit, is communication between the EVSE and the electrical vehicle based by CAN, controller area network, and/or PLC, power line communication, protocol.

In another preferred implementation the at least one switch is configured for switching a positive direct current, DC, and negative DC connection between two power stages. Thus, the switch switches both DC+ and DC- as through both DC+ and DC- Y-capacitance can be added to an output of the EVSE at the outlet.

Generally, the at least one switch can be provided as an electronic switch and/or as a contactor. In a preferred implementation the at least one switch is provided as diode. Replacing respectively providing the at least one switch allows for a simple implementation, as the diode only combines the y-capacitance if the diode is conducting. Preferably two diodes are provided, each one within the DC+ and the DC-current path and such wise arranged opposite to each other.

In another preferred implementation the electric vehicle comprises a charging socket into which a charging connector of the at least one outlet is pluggable, whereby the charging socket is keyed with the vehicle information. Such keying would prevent a 'high' capacitance EVSE from connecting to a 'low capacitance' electric vehicle. The keying can be detected by an appropriate means to constitute the vehicle information such that based on the so detected vehicle information the y-capacitance can limited by the control device to a required respectively such wise defined maximum value. The charging socket can be keyed by mechanical means, such as a notch, and/or by electrical means, for example comprising a RFID tag, which is read by the charging connector with a respective RFID reader device.

In a preferred implementation the at least one outlet comprises a plurality of charging cables for connecting to the electric vehicle and the vehicle information is associated to the respective charging cable. The plurality of charging cables are preferably associated to different charging standards, such as for instance CHAdeMO, GB, Tesla, etc. Thus, use of a specific outlet respectively of a specific charging cable would set the maximum Y-capacitance that is allowed for the respective standard, and therefore via the control device the maximum number of power stages allowed. On the other side, if a bus, pantograph or other type of electric vehicle allows for more Y-capacitance in the EVSE, use of such an outlet could determine the maximum y-capacitance allowed and therefore the maximum number of power stages allowed. Remaining power stages can be used for other outlets, as long as there too, the y-capacitance is limited.

In another preferred implementation the at least one switch is provided as matrix, comprises a diode and/or a combination thereof. Such switching matrix preferably comprising the at least one respectively all switches provides a simple and effect means for connecting a plurality of power stages in parallel and/or even in series. The switching matrix may comprise contactors, electronic switches such as IGBTs and/or diodes as switches.

The object is further solved by a method for charging an electric vehicle by an electric vehicle supply equipment, EVSE, comprising
a plurality of power stages each configured for providing electrical energy to charge the electrical vehicle and each comprising a Y-capacitance,
at least one outlet configured for connecting the electrical vehicle to at least one of the power stages for charging the electrical vehicle, and
at least one switch configured for connecting two power stages in parallel and/or in series, and comprising the step of
Switching the at least one switch based on the Y-capacitance and on a vehicle information.

The method such wise provides an advantageous solution for controlling charging power based on a maximum allowable Y-capacitance in respect to the actual electric vehicle to be charged i.e. based on the vehicle. The proposed solution basically allows for 'negotiating' the Y-capacitance for a respective charging session between the EVSE and the electric vehicle, based on the known Y-capacitance of the power stages and the vehicle information so that EMC requirements, for instance as defined in IEC 61851-21-2, can be accomplished and requirements of protection against electric shocks as per see ISO 6469-3 cl 7.3.3.2 can be fulfilled.

In a preferred implementation the method comprises the step of:
Switching on the at least one switch based on the Y-capacitance and on the electric vehicle information received from the electric vehicle defining a maximum allowable Y-capacity for charging the electric vehicle.

In another preferred implementation of the method switching comprises switching a positive direct current, DC, and negative DC connection between two power stages. In a preferred implementation of the method the at least one switch is provided as diode. In another preferred implementation of the method the electric vehicle comprises a charging socket into which a charging connector of the at least one outlet is pluggable, whereby the charging socket is keyed with the vehicle information, and the method comprises the step of:
Determining the vehicle information from the keyed charging socket.

In a preferred implementation of the method the at least one outlet comprises a plurality of charging cables for connecting to the electric vehicle and the vehicle information is associated to the respective charging cable. In another preferred implementation of the method the at least one switch is provided as matrix, comprises a diode and/or a combination thereof.

Further embodiments and advantages of the method are directly and unambiguously derived by the person skilled in the art from the arrangement as described before.

### Brief description of drawings

These and other aspects of the invention will be apparent from and elucidated with reference to the embodiment described hereinafter.

In the drawings:

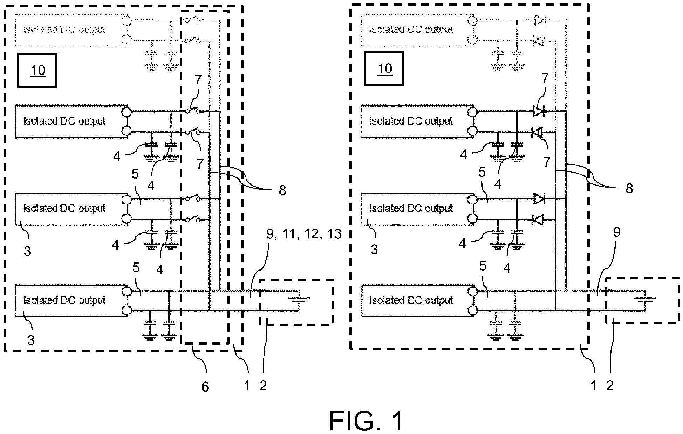

Fig. 1 shows an exemplary embodiment of the invention in a schematic view.

### Description of embodiments

Fig. 1 shows exemplary embodiment of an electric vehicle charging arrangement in a schematic view. The vehicle charging arrangement comprises an electric vehicle supply equipment, EVSE, 1 and an electric vehicle 2, each shown by dashed lines, whereby the electric vehicle 2 is connected to EVSE 1 for such wise charging the electric vehicle 2 with electrical energy. The EVSE 1 is connected to an AC grid, not shown, for receiving AC, which is then transformed by a transformer, not shown, and converted to DC by a converter, not shown.

The EVSE 1 comprises a plurality of power stages 3, each comprising a respective converter and a Y-capacitance 4 of two times 500nF. Specifically, as can be seen from Fig. 1, each a single Y-capacitance 4 of 500 nF is connected between a positive DC output 5 of the power stage 3 and ground respectively between a negative DC output 5 of the power stage 3 and ground. The EVSE 1 further comprises a switch matrix 6 provided as a plurality of switches 7 for connecting two power stages 3 in parallel. Thereby, the switches 7, which each switch both the positive DC output 5 and the negative DC output 5, are provided in a current path between the DC output 5 and a DC bus 8 connecting all DC outputs 5 to an outlet 9, only schematically depicted.

Alternatively, the switches 7 can be provided between each two DC outputs 5 of two respective power stages 3, not shown. In Fig. 1 the lowest power stage 3 is not depicted with such switch 7 in the current path between the respective DC output 5 and the DC bus 8. Further switches, not shown, could be present for connecting respectively disconnecting the outlet 9 from the power stages 3. The electric vehicle 2 is connected with a charging cable 11 plugged with a respective charging connector 12 into a charging socket 13 of the electric vehicle 2 to the outlet 9 and thus to the DC bus 8, only schematically depicted.

The EVSE 1 comprises a computerized control device 10 for switching all switches 7 based on the Y-capacitance 4 and based on a vehicle information. The vehicle information can be submitted wirelessly or wired via the charging cable 11 from the electric vehicle 2 to the EVSE 1 respectively to the control device 10. Specifically, the control device 10 switches on a respective number of switches 7 no to exceed a maximum Y-capacity accepted by the electric vehicle 2. While 'newer' electric vehicles 2 may accept 'higher' Y-capacitances, 'older' electric vehicles 2 are characterized by a maximum Y-capacitance 4 which cannot be exceeded during a charging session for complying with EMC requirements, for instance defined in IEC 61851-21-2, and protection against electric shock, as for example defined in ISO 6469-3 cl 7.3.3.2. Such wise the control device 10, based on the (known) Y-capacitance 4 of the switches 7 and based on a vehicle information associated to a maximum Y-capacitance 4 which cannot be exceeded during the charging session respectively switches the switches 7.

Fig. 1 shows on the right side an alternative embodiment, whereby the switches 7 are each provided as diode. Thereby, one diode is provided in the current path of the positive DC output 5 and another diode is provided in the current path of the negative DC output 5, whereby the diodes are arranged opposite to each other. In another not depicted embodiment the electric vehicle 2 comprises a charging socket 13 into which a charging connector 12 of the at least one outlet 9 is pluggable, whereby the charging socket 13 is mechanically and/or electrically keyed with the vehicle information, which is then used by the control device 10 for respectively switching on respectively off the switches 7. In other not depicted embodiment the at least one outlet 9 comprises a plurality of charging cables 11 for connecting to the electric vehicle 2 and the vehicle information is associated to the respective charging cable. The plurality of charging cables 11 are associated to different standards such as CHAdeMO, GB, Tesla, etc. so that use of a specific outlet 9 associated to the respective charging cable 11 sets the maximum Y-capacitance 4 that is allowed for the respective electric vehicle 2 and thus the maximum number of allowed power stages 3.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: EVSE
- 2: electric vehicle
- 3: power stage
- 4: Y-capacitance
- 5: DC output
- 6: switch matrix
- 7: switch
- 8: DC switch
- 9: outlet
- 10: control device
- 11: charging cable
- 12: charging connector
- 13: charging socket

## Claims

1. Electric vehicle charging arrangement comprising an electric vehicle supply equipment, EVSE, (1) and an electric vehicle (2),
the EVSE (1) comprising
a plurality of power stages (3) each configured for providing electrical energy to charge the electrical vehicle (2) and each comprising a Y-capacitance (4),
at least one outlet (9) configured for connecting the electrical vehicle (2) to at least one of the power stages (3) for charging the electrical vehicle (2),
at least one switch (7) configured for connecting two power stages (3) in parallel and/or in series, and
a control device (10) and/or the electric vehicle (2) are configured for switching the at least one switch (7) based on the Y-capacitance (4) and on a vehicle information.

2. Electric vehicle charging arrangement according to the previous claim, comprising the control device (10) and whereby the control device (10) is configured for switching on the at least one switch (7) based on the Y-capacitance (4) of all power stages (3) and on the vehicle information received from the electric vehicle (2) defining a maximum allowable Y-capacity for charging the electric vehicle (2).

3. Electric vehicle charging arrangement according to any of the previous claims, whereby the at least one switch (7) is configured for switching a positive direct current, DC, and negative DC connection between two power stages (3).

4. Electric vehicle charging arrangement according to any of the previous claims, whereby the at least one switch (7) is provided as diode.

5. Electric vehicle charging arrangement according to any of the previous claims, whereby the electric vehicle (2) comprises a charging socket (13) into which a charging connector (12) of the at least one outlet (9) is pluggable, whereby the charging socket (13) is keyed with the vehicle information.

6. Electric vehicle charging arrangement according to any of the previous claims, whereby the at least one outlet (9) comprises a plurality of charging cables (11) for connecting to the electric vehicle (2) and the vehicle information is associated to the respective charging cable.

7. Electric vehicle charging arrangement according to any of the previous claims, whereby the at least one switch (7) is provided as matrix (6), comprises a diode and/or a combination thereof.

8. Method for charging an electric vehicle (2) by an electric vehicle supply equipment, EVSE, (1) comprising
a plurality of power stages (2) each configured for providing electrical energy to charge the electrical vehicle (2) and each comprising a Y-capacitance (4),
at least one outlet (9) configured for connecting the electrical vehicle (2) to at least one of the power stages (1) for charging the electrical vehicle (2), and
at least one switch (7) configured for connecting two power stages (3) in parallel and/or in series, and comprising the step of
Switching the at least one switch (7) based on the Y-capacitance (4) and on a vehicle information.

9. Method according to the previous method claim, comprising the step of:
Switching on the at least one switch (7) based on the Y-capacitance (4) and on the vehicle information received from the electric vehicle (2) defining a maximum allowable Y-capacity for charging the electric vehicle (2).

10. Method according to any of the previous method claims, whereby switching comprises switching a positive direct current, DC, and negative DC connection between two power stages (3).

11. Method according to any of the previous method claims, whereby the at least one switch (7) is provided as diode.

12. Method according to any of the previous method claims, whereby the electric vehicle (2) comprises a charging socket (13) into which a charging connector (12) of the at least one outlet (9) is pluggable, whereby the charging socket (13) is keyed with the vehicle information, comprising the step of:
Determining the vehicle information from the keyed charging socket (13).

13. Method according to any of the previous method claims, whereby the at least one outlet (9) comprises a plurality of charging cables (11) for connecting to the electric vehicle (2) and the vehicle information is associated to the respective charging cable (11).

14. Method according to any of the previous method claims, whereby the at least one switch (7) is provided as matrix (6), comprises a diode and/or a combination thereof.
